# EUROPEAN PATENT SPECIFICATION

(11) **EP 4 057 100 B1**
(45) Date of publication and mention of the grant of the patent: **21.01.2026**
(21) Application number: 20885252.5
(22) Date of filing: 18.08.2020
(51) Int. Cl.: G06Q 10/04

(54) **VEHICLE SCHEDULING METHOD, APPARATUS AND SYSTEM**
FAHRZEUGZEITPLANUNGSVERFAHREN, -VORRICHTUNG UND -SYSTEM
PROCÉDÉ, APPAREIL ET SYSTÈME DE PLANIFICATION DE VÉHICULE

(30) Priority: 04.11.2019 CN 201911066406
(43) Date of publication of application: 14.09.2022
(73) Proprietor: Beijing Jingdong Qianshi Technology Co., Ltd., Beijing 100176 (CN)
(72) Inventor: KONG, Peiling, Beijing 100176 (CN)
(74) Representative: Page White Farrer
(86) International application number: PCT/CN2020/109839
(87) International publication number: WO 2021/088461

(56) References cited:
- CN-A- 107 154 160
- CN-A- 109 784 526
- CN-A- 109 993 969
- CN-A- 110 231 040
- CN-A- 110 274 604
- CN-B- 108 710 875
- US-A1- 2018 167 551

## Description

### CROSS-REFERENCE TO RELATED APPLICATIONS

This application is based on and claims the priority to the Chinese patent application No. 201911066406.9 filed on November 4, 2019.

### TECHNICAL FIELD

This disclosure relates to the field of scheduling, and particularly, to a vehicle scheduling method, apparatus, and system.

### BACKGROUND

In current warehouse logistics, ex-warehouse sorting has been the most important for efficiency improvement. Unmanned sorting vehicles are applied in place of manual sorting, so that not only labor cost, but also a sorting error rate caused by labor fatigue and the like are reduced.

Related sorting vehicle scheduling, only based on a path planning algorithm, a path finding algorithm and the like, performs path issuing and scheduling for the vehicles by calculating shortest paths. For an application scenario with small yards and few vehicles, this solution will not have a great impact on sorting efficiency. But for a scenario with too many scheduling vehicles, it will have a great impact on the sorting efficiency.

CN 107 154 160 A discloses a quick passage guidance system of an ambulance, which comprises a medical end server, a traffic end server, an onboard MCU, an onboard GPS module, an onboard display screen and an onboard wireless module, wherein the traffic end server plans a plurality of paths between a hospital and a help seeker on a GPS map according to address information of the help seeker and the hospital, and finds out the path with an optimal traffic condition as a preferable path based on data of a speed measurement device and an image acquisition camera; finally, the traffic end server transmits data of the preferable path to the medical end server; the medical end server transmits the data of the preferable path to the ambulance; the onboard MCU in the ambulance controls the onboard display screen to generate optimal path map navigation.

CN 108 710 875 B discloses method for counting road vehicles by an aerial method based on deep learning, including obtaining the vehicle sample image by plane under a variety of image-forming conditions.

### SUMMARY

One technical problem to be solved by the present disclosure is to provide a vehicle scheduling method, apparatus and system, capable of improving sorting efficiency.

According to an aspect of the disclosure, there is provided a vehicle scheduling method, performed by a vehicle scheduling apparatus, comprising: acquiring image information of each area; determining vehicle density information in each area according to the image information; configuring a first path cost corresponding to a path of each area according to the vehicle density information in each area; acquiring a priority of each target position; setting a second path cost for a path reaching each target position; according to the priority of each target position; calculating a path value corresponding to each planning path among a plurality of planning paths from a starting position to a plurality of target positions for a target vehicle, according to the first path cost configured for the path of each area and the second path cost set for the path reaching each target position; and determining an optimal planning path of the target vehicle by taking a minimum path value as a target, wherein the optimal planning path is sent to the target vehicle from the vehicle scheduling apparatus.

In some embodiments, the determining vehicle density information in each area according to the image information comprises: recognizing each vehicle according to the image information; counting the number of vehicles in each area; and determining the vehicle density information in each area according to the number of vehicles in each area.

In some embodiments, a sample image is acquired; a vehicle in the sample image is labeled; and a vehicle recognition model is trained by using the labeled image to recognize the vehicle in the image information according to the trained vehicle recognition model.

In some embodiments, the greater the vehicle density, the greater the first path cost configured for the path of the corresponding area; and/or the higher the priority, the smaller the second path cost configured for the path of the corresponding target position.

According to another aspect of the present disclosure, there is also provided a vehicle scheduling apparatus, comprising: an image acquisition unit configured to acquire image information of each area; a vehicle density determination unit configured to determine vehicle density information in each area according to the image information; a path cost setting unit configured to configure a first path cost corresponding to a path of each area according to the vehicle density information in each area, acquire a priority of each target position and set a second path cost for a path reaching each target position according to the priority of each target position; a planning path value determination unit configured to calculate a path value corresponding to each planning path among a plurality of planning paths from a starting position to a plurality of target positions for a target vehicle, according to the first path cost configured for the path of each area and the second path cost set for the path reaching each target position; and an optimal path determination unit configured to determine an optimal planning path of the target vehicle by taking a minimum path value as a target, wherein the optimal planning path is sent to the target vehicle from the vehicle scheduling apparatus.

According to still another aspect of the present disclosure, there is also provided a vehicle scheduling apparatus, comprising: a memory; and a processor coupled to the memory, the processor being configured to perform, based on instructions stored in the memory, the vehicle scheduling method as described above.

According to still another aspect of the present disclosure, there is also provided a vehicle scheduling system, comprising: the vehicle scheduling apparatus described above; and an image acquisition device configured to acquire image information of each area.

According to still another aspect of the present disclosure, there is also provided a computer-readable storage medium having thereon stored computer program instructions which, when executed by a processor, implement the vehicle scheduling method described above.

According to the embodiments of the present disclosure, the first path cost is configured corresponding to the path of each area according to the vehicle density information in each area, the path value corresponding to each planning path is calculated according to the first path cost configured for the path of each area, and the optimal planning path of the target vehicle is determined by taking the minimum path value as the target. Compared with the related art in which when many vehicles cause congestion, too much time is needed to solve the congestion, congestion routes can be reasonably avoided in the embodiments, so that the sorting efficiency is improved.

Further features of the present disclosure and advantages thereof will become apparent from the following detailed description of exemplary embodiments thereof, which proceeds with reference to the accompanying drawings.

### BRIEF DESCRIPTION OF THE DRAWINGS

The accompanying drawings, which constitute a part of this specification, illustrate embodiments of the present disclosure and, together with the description, serve to explain the principles of the present disclosure.

The present disclosure can be more clearly understood from the following detailed description taken with reference to the accompanying drawings, in which:
Fig. 1 is a schematic flow diagram of a vehicle scheduling method according to some embodiments of the present disclosure.
Fig. 2 is a schematic flow diagram of a vehicle scheduling method according to other embodiments of the present disclosure.
Fig. 3 is a schematic structural diagram of a vehicle scheduling apparatus according to some embodiments of the present disclosure.
Fig. 4 is a schematic structural diagram of a vehicle scheduling apparatus according to other embodiments of the present disclosure.
Fig. 5 is a schematic structural diagram of a vehicle scheduling apparatus according to other embodiments of the present disclosure.
Fig. 6 is a schematic structural diagram of a vehicle scheduling system according to some embodiments of the present disclosure.

### DETAILED DESCRIPTION

Various exemplary embodiments of the present disclosure will now be described in detail with reference to the accompanying drawings. It should be noted that: relative arrangements of components and steps, numerical expressions and numerical values set forth in these embodiments do not limit the scope of the present disclosure unless specifically stated otherwise.

Meanwhile, it should be understood that sizes of various portions shown in the drawings are not drawn to actual scale for ease of description.

The following description of at least one exemplary embodiment is merely illustrative in nature and is in no way intended to limit this disclosure and its application or use.

Techniques, methods, and devices known to one of ordinary skill in the related art may not be discussed in detail but they should be regarded as part of the granted specification where appropriate.

In all examples shown and discussed herein, any specific value should be construed as exemplary only, not as a limitation. Therefore, other examples of an exemplary embodiment can have different values.

It should be noted that: similar reference numbers and letters refer to similar items in the following drawings, and therefore, once a certain item is defined in one drawing, it need not be discussed further in subsequent drawings.

To make objectives, technical solutions and advantages of the present disclosure more apparent, the present disclosure will be further described in detail below with reference to specific embodiments and the accompanying drawings.

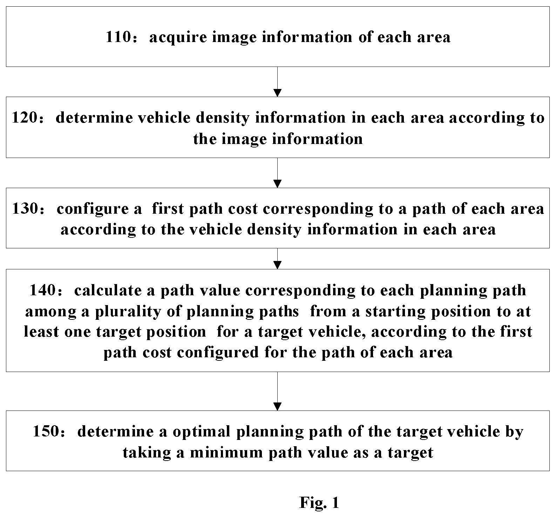

Fig. 1 is a schematic flow diagram of a vehicle scheduling method according to some embodiments of the present disclosure.

In step 110, image information of each area is acquired.

In some embodiments, an entire sorting area can be divided into a plurality of small areas. One or more cameras are arranged in the sorting area to acquire the image information of each area.

In step 120, vehicle density information in each area is determined according to the image information.

In some embodiments, each vehicle is recognized according to the image information; the number of vehicles in each area is counted; the vehicle density information in each area is determined according to the number of vehicles in each area. For example, if 20 vehicles are operating in a first area and 10 vehicles are operating in a second area, vehicle density of the first area is greater than that of the second area.

In some embodiments, a vehicle recognition model can be trained first, and the vehicles in the image can be recognized according to the trained vehicle recognition model. For example, a sample image is acquired first, a vehicle in the sample image is labeled, and the vehicle recognition model is trained by using the labeled image. The vehicle recognition model is, for example, a neural network model or the like.

The step is a dynamic calculation process, for example, in first ten seconds, there are 5 vehicles in a certain area, which corresponds to one vehicle density, and after ten seconds, there are 2 vehicles in the area, which corresponds to one other vehicle density, that is, a road condition of a yard is analyzed in real time.

In step 130, a first path cost is configured corresponding to a path of each area according to the vehicle density information in each area. The greater the vehicle density, the greater the first path cost configured for the path of the corresponding area. For example, if the vehicle density in areas A, B, and C decreases sequentially, a cost of a path passing through the area A increases 5, a cost of a path passing through the area B increases 3, and a cost of a path passing through the area C increases 0.

In step 140, a path value corresponding to each planning path among a plurality of planning paths from a starting position to at least one target position for a target vehicle is calculated according to the first path cost configured for the path of each area.

For example, a certain target vehicle can reach the target position from the area A, or can reach the target position from the area B or C. Routes in the area A comprises routes 1, 2, 3, and 4, routes in the area B comprises routes 5, 6, and 7, and routes in the area C comprises routes 8, 9, and 10. According to these routes, a plurality of planning paths can be formed. On the basis of each planning path cost, the first path cost passing through the corresponding area is added to obtain a path value corresponding to each planning path. When an original planning path is calculated, a Dijkstra path planning algorithm and the like can be adopted.

In step 150, an optimal planning path of the target vehicle is determined by taking a minimum path value as a target.

In the above embodiments, the first path cost is configured for the path of each area according to the vehicle density information in each area, the path value corresponding to each planning path is calculated according to the first path cost configured for the path of each area, and the optimal planning path of the target vehicle is determined by taking the minimum path value as the target. Compared with the related art in which when many vehicles cause congestion, too much time is needed to solve the congestion, congestion routes can be reasonably avoided in the embodiments, so that sorting efficiency is improved.

In another embodiment of the present disclosure, if the target vehicle corresponds to a plurality of target positions, a path value corresponding to each planning path among a plurality of planning paths of each target position corresponding to the target vehicle needs to be determined; and an optimal target position of the target vehicle is determined by taking a minimum path value as a target.

For example, the target vehicle corresponds to a plurality of unloading spots, parking places, charging places, and the like. Taking the unloading spot as an example, in the related art, area division is performed according to priority, and when an unloading spot with a highest priority is idle, the spot will be issued to the vehicle as an optimal position, no matter whether there is congestion halfway. Even if a route reaching a position with a low priority is smoother, the unloading spot with the highest priority will be taken as the optimal unloading spot, so that the unloading spot with the high priority is occupied for a long time, and an unloading spot with a low priority is less utilized. By use of the solution, the vehicle density of each area is considered to automatically avoid the congestion routes, so that a more accurate optimal position can be recommended.

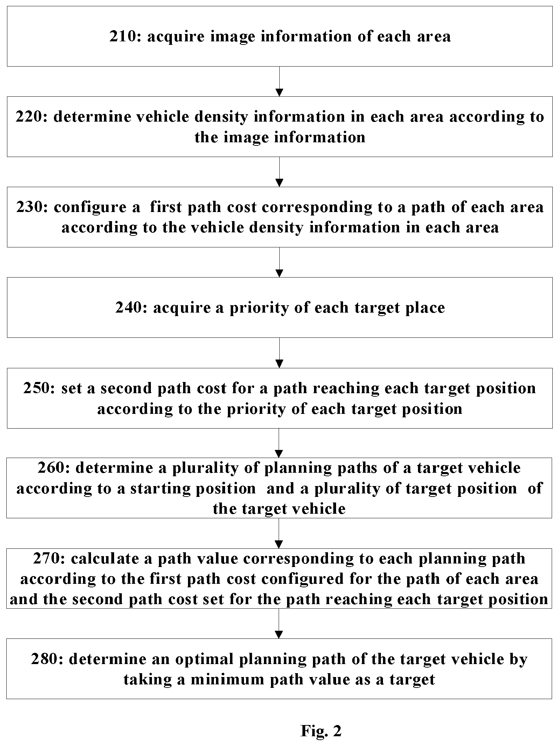

Fig. 2 is a schematic flow diagram of a vehicle scheduling method according to other embodiments of the present disclosure.

In step 210, image information for each area is acquired.

In step 220, vehicle density information in each area is determined according to the image information.

In step 230, a first path cost is configured for a path of each area according to the vehicle density information in each area.

In step 240, a priority of each target position is acquired.

In step 250, a second path cost is set for a path reaching each target position according to the priority of each target position. The higher the priority, the smaller the second path cost configured for the path corresponding to the target position.

The steps 210 and 240 can be performed simultaneously or in a random order.

In step 260, a plurality of planning paths of a target vehicle are determined according to a starting position and a plurality of target positions of the target vehicle.

In step 270, a path value corresponding to each planning path is calculated according to the first path cost configured for the path of each area and the second path cost set for the path of each target position.

In step 280, an optimal planning path of the target vehicle is determined by taking a minimum path value as a target.

In the above embodiments, when the optimal planning path is determined, both the halfway congestion condition and the priority condition of the target position are considered to obtain the optimal planning path with the minimum path value through comprehensive calculation, so that the sorting efficiency is improved.

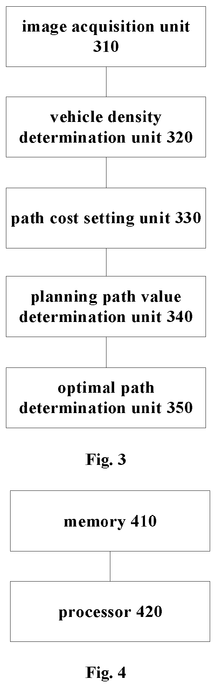

Fig. 3 is a schematic structural diagram of a vehicle scheduling apparatus according to some embodiments of the present disclosure. The vehicle scheduling apparatus comprises an image acquisition unit 310, a vehicle density determination unit 320, a path cost setting unit 330, a planning path value determination unit 340, and an optimal path determination unit 350.

The image acquisition unit 310 is configured to acquire image information of each area.

The vehicle density determination unit 320 is configured to determine vehicle density information in each area according to the image information.

In some embodiments, each vehicle is recognized according to the image information; the number of vehicles in each area is counted; the vehicle density information in each area is determined according to the number of vehicles in each area.

The path cost setting unit 330 is configured to configure a first path cost for a path of each area according to the vehicle density information in each area. The greater the vehicle density, the greater the first path cost configured for the path of the corresponding area.

The planning path value determination unit 340 is configured to calculate a path value corresponding to each planning path among a plurality of planning paths from a starting position to at least one target position for a target vehicle, according to the first path cost configured for the path of each area.

On the basis of each planning path cost, the first path cost passing through the corresponding area is added to obtain the path value corresponding to each planning path.

The optimal path determination unit 350 is configured to determine an optimal planning path of the target vehicle by taking a minimum path value as a target.

In the above embodiments, the first path cost is configured for the path of each area according to the vehicle density information in each area, the path value corresponding to each planning path is calculated according to the first path cost configured for the path of each area, and the optimal planning path of the target vehicle is determined by taking the minimum path value as the target, so that the congestion routes can be reasonably avoided, and the sorting efficiency is improved.

In some embodiments, the image acquisition unit 310 and the vehicle density determination unit 320 can be integrated in a video surveillance module. The path cost setting unit 330, the planning path value determination unit 340, and the optimal path determination unit 350 can be integrated in a scheduling module. That is, the video surveillance module asynchronously pushes the road conditions of the yard and the position to assist the scheduling module. The scheduling module has a dedicated responsibility, i.e., specially responsible for path calculation and strategy, to improve the scheduling efficiency.

In other embodiments of the present disclosure, if the target vehicle corresponds to a plurality of target positions, the planning path value determination unit 340 is further configured to determine a path value corresponding to each planning path among a plurality of planning paths of each target position corresponding to the target vehicle; and the optimal path determination unit 350 is further configured to determine an optimal target position of the target vehicle by taking a minimum path value as a target.

In other embodiments of the present disclosure, the path cost setting unit 330 is further configured to acquire a priority of each target position and set a second path cost for a path reaching each target position according to the priority of each target position; and the planning path value determination unit 340 is further configured to calculate the path value corresponding to each planning path according to the first path cost configured for the path of each area and the second path cost set for the path of each target position. The optimal path determination unit 350 is configured to determine the optimal planning path of the target vehicle by taking the minimum path value as the target.

In the above embodiments, when the optimal planning path is determined, both the halfway congestion condition and the priority condition of the target position are considered to obtain the optimal planning path with the minimum path value through comprehensive calculation, so that the sorting efficiency is improved.

Fig. 4 is a schematic structural diagram of a vehicle scheduling apparatus according to other embodiments of the present disclosure. The apparatus comprises a memory 410 and a processor 420, wherein: the memory 410 can be a magnetic disk, flash memory, or any other non-volatile storage medium. The memory is configured to store instructions in the embodiments corresponding to Figs. 1 to 2. The processor 420, which is coupled to the memory 410, can be implemented as one or more integrated circuits, such as a microprocessor or microcontroller. The processor 420 is configured to execute the instructions stored in the memory.

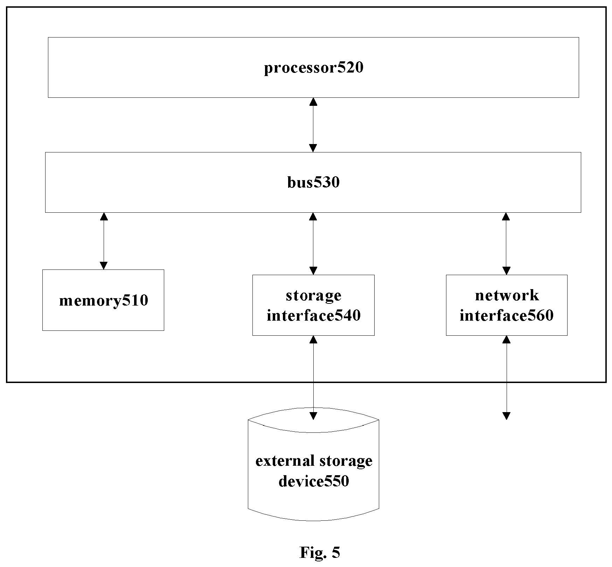

In some embodiments, as also shown in Fig. 5, the apparatus 500 comprises a memory 510 and a processor 520. The processor 520 is coupled to the memory 510 through a BUS 530. The apparatus 500 can also be connected to an external storage device 550 through a storage interface 540 to call external data, and can also be connected to a network or another computer system (not shown) through a network interface 560, which will not be described in detail herein.

In the embodiments, data instructions are stored in the memory and then processed by the processor, so that the sorting efficiency is improved.

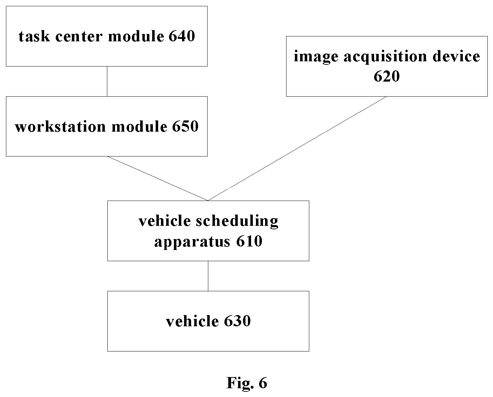

Fig. 6 is a schematic structural diagram of a vehicle scheduling system according to some embodiments of the present disclosure. The system comprises the above-mentioned vehicle scheduling apparatus 610 and an image acquisition device 620.

The image acquisition device 610 is configured to acquire image information of each area and send the image information to the vehicle scheduling apparatus 610. The vehicle scheduling apparatus 610 determines an optimal planning path through path planning, and sends the optimal planning path to a corresponding target vehicle 630.

In other embodiments, the system can further comprise a task center module 640, and a workstation module 650.

The task center module 640 performs uniform management on tasks issued by an upstream system.

The workstation module 650 is responsible for performing business logic processing on the upstream tasks and routing on task issuing. For example, processing is performed corresponding to different task types, such as a sorting task, a parking task, and a charging task, for example, the task center module 640 issues the sorting task, and the workstation module 650 performs processing according to the sorting task type, and analyzes which package supplying platform should be reached for loading, and then which unloading spot should be reached for unloading, and the like, i.e., to determine a starting position and a target position of a target vehicle.

In the above embodiments, the vehicle density is counted by using video surveillance, and then dynamic congestion area division and path cost addition are performed, to find out the optimal planning path for vehicle scheduling. This application has more obvious advantages in an application scenario with a larger yard and more vehicles.

In other embodiments, a computer-readable storage medium has stored thereon computer program instructions which, when executed by a processor, implement the steps of the method in the embodiments corresponding to Figs. 1 to 2. It should be appreciated by those skilled in the art that, the embodiments of the present disclosure can be provided as a method, apparatus, or computer program product. Accordingly, the present disclosure can take a form of an entire hardware embodiment, an entire software embodiment or an embodiment combining software and hardware aspects. Furthermore, the present disclosure can take a form of a computer program product implemented on one or more computer-available non-transitory storage media (comprising, but not limited to, disk memory, CD-ROM, optical memory, and so forth) having computer-available program code embodied therein.

The present disclosure is described with reference to flow diagrams and/or block diagrams of the method, apparatus (system) and computer program product according to the embodiments of the present disclosure. It should be understood that each flow and/or block of the flow diagrams and/or block diagrams, and a combination of flows and/or blocks in the flow diagrams and/or block diagrams, can be implemented by computer program instructions. These computer program instructions can be provided to a processor of a general-purpose computer, special-purpose computer, embedded processor, or other programmable data processing device to produce a machine, such that the instructions, which are executed by the processor of the computer or other programmable data processing apparatus, create means for implementing a function specified in one or more flows of the flow diagrams and/or one or more blocks of the block diagrams.

These computer program instructions can also be stored in a computer-readable memory that can guide the computer or other programmable data processing device to work in a specific way, such that the instructions stored in the computer-readable memory produce an article of manufacture comprising instruction means which implement a function specified in one or more flows of the flow diagrams and/or one or more blocks of the block diagrams.

These computer program instructions can also be loaded onto the computer or other programmable data processing device, so that a series of operation steps are performed on the computer or other programmable device to produce computer-implemented processing, and therefore, the instructions which are executed on the computer or other programmable device provide steps for implementing a function specified in one or more flows of the flow diagrams and/or one or more blocks of the block diagrams.

Thus far, the present disclosure has been described in detail. Some details well known in the art have not been described in order to avoid obscuring the concepts of the present disclosure. Those skilled in the art can now fully appreciate how to implement the solutions disclosed herein, in view of the foregoing description.

Although some specific embodiments of the present disclosure have been described in detail by way of examples, it should be understood by those skilled in the art that the above examples are for illustration only and are not intended to limit the scope of the present disclosure. It should be appreciated by those skilled in the art that modifications can be made to the above embodiments without departing from the scope of the present disclosure. The scope of the present disclosure is defined by the attached claims.

## Claims

1. A vehicle scheduling method, performed by a vehicle scheduling apparatus (610), comprising:
acquiring image information of each area (210);
determining vehicle density information in each area according to the image information (220);
configuring a first path cost corresponding to a path of each area according to the vehicle density information in each area (230);
acquiring a priority of each target position (240);
setting a second path cost for a path reaching each target position according to the priority of each target position (250);
calculating a path value corresponding to each planning path among a plurality of planning paths from a starting position to a plurality of target positions for a target vehicle (260), according to the first path cost configured for the path of each area and the second path cost set for the path reaching each target position (270); and
determining an optimal planning path of the target vehicle by taking a minimum path value as a target (280), wherein the optimal planning path is sent to the target vehicle (630) from the vehicle scheduling apparatus (610).

2. The vehicle scheduling method according to claim 1, wherein the determining vehicle density information in each area according to the image information comprises:
recognizing each vehicle according to the image information;
counting a number of vehicles in each area; and
determining the vehicle density information in each area according to the number of vehicles in each area.

3. The vehicle scheduling method according to claim 2, further comprising:
acquiring a sample image;
labeling a vehicle in the sample image; and
training a vehicle recognition model by using the labeled image, to recognize the vehicle in the image information according to the trained vehicle recognition model.

4. The vehicle scheduling method according to any of claims 1 to 3, wherein the greater the vehicle density, the greater the first path cost configured for the path of the corresponding area.

5. The vehicle scheduling method according to claim 5, wherein the higher the priority, the smaller the second path cost configured for the path reaching the corresponding target position.

6. A vehicle scheduling apparatus, comprising:
an image acquisition unit (310) configured to acquire image information of each area;
a vehicle density determination unit (320) configured to determine vehicle density information in each area according to the image information;
a path cost setting unit (330) configured to configure a first path cost corresponding to a path of each area according to the vehicle density information in each area, acquire a priority of each target position and set a second path cost for a path reaching each target position according to the priority of each target position;
a planning path value determination unit (340) configured to calculate a path value corresponding to each planning path among a plurality of planning paths from a starting position to a plurality of target positions for a target vehicle, according to the first path cost configured for the path of each area and the second path cost set for the path reaching each target position; and
an optimal path determination unit (350) configured to determine an optimal planning path of the target vehicle by taking a minimum path value as a target, wherein the optimal planning path is sent to the target vehicle (630) from the vehicle scheduling apparatus (610).

7. A vehicle scheduling apparatus, comprising:
a memory (410); and
a processor (420) coupled to the memory (410), the processor being configured to perform, based on instructions stored in the memory (410), the vehicle scheduling method according to any of claims 1 to 5.

8. A vehicle scheduling system, comprising:
the vehicle scheduling apparatus according to claim 6; and
an image acquisition device configured to acquire image information of each area.

9. A computer-readable storage medium, having thereon stored computer program instructions which, when executed by a processor, implement the vehicle scheduling method according to any of claims 1 to 5.

## Patentansprüche

1. Fahrzeugplanungsverfahren, das von einer Fahrzeugplanungsvorrichtung (610) durchgeführt wird, umfassend:
Erfassen von Bildinformationen jedes Bereichs (210);
Bestimmen von Fahrzeugdichteinformationen in jedem Bereich nach den Bildinformationen (220);
Konfigurieren einer ersten Wegekostenfunktion, die einem Pfad jedes Bereichs nach den Fahrzeugdichteinformationen in jedem Bereich (230) entspricht;
Erfassen einer Priorität für jede Zielposition (240);
Setzen eines zweiten Pfadkostenwerts für einen Pfad, der jede Zielposition erreicht, nach der Priorität jeder Zielposition (250);
Berechnen eines Pfadwerts, der jedem Planungspfad unter einer Vielzahl von Planungspfaden von einer Startposition zu einer Vielzahl von Zielpositionen für ein Zielfahrzeug (260) entspricht, nach den ersten Pfadkosten, die für den Pfad jedes Bereichs konfiguriert sind, und den zweiten Pfadkosten, die für den Pfad festgelegt sind, der jede Zielposition erreicht (270); und
Bestimmen eines optimalen Pfads des Zielfahrzeugs, indem ein minimaler Pfadwert als Ziel (280) genommen wird, wobei der optimale Pfad von der Fahrzeugplanungsvorrichtung (610) an das Zielfahrzeug (630) gesendet wird.

2. Fahrzeugplanungsverfahren nach Anspruch 1, wobei das Bestimmen von Fahrzeugdichteinformationen in jedem Bereich anhand der Bildinformationen Folgendes umfasst:
Erkennen jedes Fahrzeugs nach den Bildinformationen;
Zählen der Anzahl der Fahrzeuge in jedem Bereich; und
Bestimmen der Fahrzeugdichteinformationen in jedem Bereich nach der Anzahl der Fahrzeuge in jedem Bereich.

3. Fahrzeugplanungsverfahren nach Anspruch 2, ferner umfassend:
Erfassen eines Probebildes;
Kennzeichnen eines Fahrzeugs im Probenbild; und
Trainieren eines Fahrzeugerkennungsmodells unter Verwendung des gekennzeichneten Bildes, um das Fahrzeug in den Bildinformationen nach dem trainierten Fahrzeugerkennungsmodell zu erkennen.

4. Fahrzeugplanungsverfahren nach einem der Ansprüche 1 bis 3, wobei die ersten Wegkosten für den Pfad des entsprechenden Bereichs umso größer sind, je größer die Fahrzeugdichte ist.

5. Fahrzeugplanungsverfahren nach Anspruch 5, wobei je höher die Priorität, desto geringer die zweiten Wegkosten, die für den Pfad zum Erreichen der entsprechenden Zielposition konfiguriert sind.

6. Fahrzeugplanungsvorrichtung, umfassend:
eine Bildaufnahmeeinheit (310), die konfiguriert ist, um Bildinformationen jedes Bereichs zu erfassen;
eine Fahrzeugdichtebestimmungseinheit (320), die konfiguriert ist, um Fahrzeugdichteinformationen in jedem Bereich nach den Bildinformationen zu bestimmen;
eine Pfadkosteneinstellungseinheit (330), die konfiguriert ist, um eine erste Pfadkosten entsprechend einem Pfad jedes Bereichs nach den Fahrzeugdichteinformationen in jedem Bereich zu konfigurieren, eine Priorität jeder Zielposition zu erfassen und eine zweite Pfadkosten für einen Pfad, der jede Zielposition erreicht, nach der Priorität jeder Zielposition festzulegen;
eine Planungspfadwertbestimmungseinheit (340), die konfiguriert ist, um einen Pfadwert zu berechnen, der jedem Planungspfad unter einer Vielzahl von Planungspfaden von einer Startposition zu einer Vielzahl von Zielpositionen für ein Zielfahrzeug entspricht, nach den ersten Pfadkosten, die für den Pfad jedes Bereichs konfiguriert sind, und den zweiten Pfadkosten, die für den Pfad festgelegt sind, der jede Zielposition erreicht; und
eine optimale Bestimmungswegeinheit (350), die konfiguriert ist, um einen optimalen Planungsweg des Zielfahrzeugs zu bestimmen, indem ein minimaler Wegwert als Ziel genommen wird, wobei der optimale Planungsweg von der Fahrzeugplanungsvorrichtung (610) an das Zielfahrzeug (630) gesendet wird.

7. Fahrzeugplanungsvorrichtung, umfassend:
einen Speicher (410); und
einen mit dem Speicher (410) gekoppelten Prozessor (420), wobei der Prozessor so konfiguriert ist, dass er basierend auf im Speicher (410) gespeicherten Anweisungen das Fahrzeugplanungsverfahren nach einem der Ansprüche 1 bis 5 ausführt.

8. Fahrzeugplanungssystem, umfassend:
die Fahrzeugplanungsvorrichtung nach Anspruch 6; und
eine Bildaufnahmevorrichtung, die so konfiguriert ist, dass sie Bildinformationen jedes Bereichs erfasst.

9. Computerlesbares Speichermedium, das Computerprogrammbefehle aufweist, die bei Ausführung durch einen Prozessor das Fahrzeugplanungsverfahren nach einem der Ansprüche 1 bis 5 implementieren.

## Revendications

1. Procédé d'ordonnancement de véhicules, mis en œuvre par un appareil d'ordonnancement de véhicules (610), comprenant :
l'acquisition d'informations d'image de chaque zone (210) ;
la détermination d'informations de densité de véhicules dans chaque zone en fonction des informations d'image (220) ;
la configuration d'un premier coût de trajet correspondant à un trajet de chaque zone en fonction des informations de densité de véhicules dans chaque zone (230) ;
l'acquisition d'une priorité de chaque position cible (240) ;
la définition d'un second coût de trajet pour un trajet atteignant chaque position cible en fonction de la priorité de chaque position cible (250) ;
le calcul d'une valeur de trajet correspondant à chaque trajet de planification parmi une pluralité de trajets de planification d'une position de départ à une pluralité de positions cibles pour un véhicule cible (260), en fonction du premier coût de trajet configuré pour le trajet de chaque zone et du second coût de trajet défini pour le trajet atteignant chaque position cible (270) ; et
la détermination d'un trajet de planification optimal du véhicule cible en prenant une valeur de trajet minimale comme cible (280), dans lequel le trajet de planification optimal est envoyé au véhicule cible (630) depuis l'appareil d'ordonnancement de véhicules (610).

2. Procédé d'ordonnancement de véhicules selon la revendication 1, dans lequel la détermination des informations de densité de véhicules dans chaque zone en fonction des informations d'image comprend :
la reconnaissance de chaque véhicule en fonction des informations d'image ;
le comptage d'un nombre de véhicules dans chaque zone ; et
la détermination des informations de densité de véhicules dans chaque zone en fonction du nombre de véhicules dans chaque zone.

3. Procédé d'ordonnancement de véhicules selon la revendication 2, comprenant en outre :
l'acquisition d'une image échantillon ;
l'étiquetage d'un véhicule dans l'image échantillon ; et
l'entraînement d'un modèle de reconnaissance de véhicule à l'aide de l'image étiquetée, afin de reconnaître le véhicule dans les informations d'image en fonction du modèle de reconnaissance de véhicule entraîné.

4. Procédé d'ordonnancement de véhicules selon l'une quelconque des revendications 1 à 3, dans lequel plus la densité de véhicules est élevée, plus le premier coût de trajet configuré pour le trajet de la zone correspondante est élevé.

5. Procédé d'ordonnancement de véhicules selon la revendication 5, dans lequel plus la priorité est élevée, plus le second coût de trajet configuré pour le trajet atteignant la position cible correspondante est faible.

6. Appareil d'ordonnancement de véhicules, comprenant :
une unité d'acquisition d'image (310) configurée pour acquérir des informations d'image de chaque zone ;
une unité de détermination de densité de véhicules (320) configurée pour déterminer des informations de densité de véhicules dans chaque zone en fonction des informations d'image ;
une unité de définition de coût de trajet (330) configurée pour configurer un premier coût de trajet correspondant à un trajet de chaque zone en fonction des informations de densité de véhicules dans chaque zone, acquérir une priorité de chaque position cible et définir un second coût de trajet pour un trajet atteignant chaque position cible en fonction de la priorité de chaque position cible ;
une unité de détermination de valeur de trajet de planification (340) configurée pour calculer une valeur de trajet correspondant à chaque trajet de planification parmi une pluralité de trajets de planification d'une position de départ à une pluralité de positions cibles pour un véhicule cible, en fonction du premier coût de trajet configuré pour le trajet de chaque zone et du second coût de trajet défini pour le trajet atteignant chaque position cible ; et
une unité de détermination de trajet optimal (350) configurée pour déterminer un trajet de planification optimal du véhicule cible en prenant une valeur de trajet minimale comme cible, dans lequel le trajet de planification optimal est envoyé au véhicule cible (630) depuis l'appareil de d'ordonnancement de véhicules (610).

7. Appareil d'ordonnancement de véhicules, comprenant :
une mémoire (410) ; et
un processeur (420) couplé à la mémoire (410), le processeur étant configuré pour réaliser, sur la base d'instructions stockées dans la mémoire (410), le procédé d'ordonnancement de véhicules selon l'une quelconque des revendications 1 à 5.

8. Système d'ordonnancement de véhicules, comprenant :
l'appareil d'ordonnancement de véhicules selon la revendication 6 ; et
un dispositif d'acquisition d'image configuré pour acquérir des informations d'image de chaque zone.

9. Support de stockage lisible par ordinateur, sur lequel sont stockées des instructions de programme informatique qui, lorsqu'elles sont exécutées par un processeur, mettent en œuvre le procédé d'ordonnancement de véhicules selon l'une quelconque des revendications 1 à 5.
